# EUROPÄISCHE PATENTSCHRIFT

(11) **EP 4 491 970 B1**
(45) Veröffentlichungstag und Bekanntmachung des Hinweises auf die Patenterteilung: **04.06.2025**
(21) Anmeldenummer: 23184670.0
(22) Anmeldetag: 11.07.2023
(51) Int. Cl.: F25B 15/02, F25B 15/04, F25B 25/02

(54) **SORPTIONSWÄRMEPUMPE UND -KREISPROZESS**
SORPTION HEAT PUMP AND LOOP PROCESS
POMPE À CHALEUR À SORPTION ET PROCÉDÉ

(43) Veröffentlichungstag der Anmeldung: 15.01.2025
(73) Patentinhaber: AGO Technologie GmbH, 95326 Kulmbach (DE)
(72) Erfinder: Ramming, Klaus, 95336 Mainleus (DE)
(74) Vertreter: Bauer, Dirk

(56) Entgegenhaltungen:
- EP-A1- 3 540 334

## Beschreibung

Die Erfindung betrifft einen Sorptionskreisprozess gemäß Anspruch

Ein Sorptionskreisprozess ist aus EP 3 964 770 A1 bekannt. Dort wird vorgeschlagen, zunächst die arme Lösung und das Kältemittel vom dem Niederdruckniveau auf das Hochdruckniveau zu pumpen und zum Hochdruckabsorber zu fördern und vor dem Hochdruckabsorber aus dem Kältemittel einen Mitteldruckteilstrom auszukoppeln und auf das Mitteldruckniveau zu entspannen, so dass das Lösungsmittel zunächst nur einen verbleibenden Hochdruckteilstrom, und die entstandene angereicherte Lösung anschließend in dem Mitteldruckabsorber den Mitteldruckteilstrom absorbiert.

Im Hintergrund der Erfindung offenbart EP 3 540 334 A1 die Verwendung einer Sorptionswärmepumpe als Wärmetransformator, in der die Lösung auf einem Mitteldruckniveau einen Mitteldruckteilstrom des Kältemittels absorbiert und die entstehende Absorptionswärme zunächst einem Teilstrom der hinter dem Austreiber verbleibenden armen Lösung zuführt. Aus der reichen Lösung vor dem Drosselelement im Austreiber nimmt die reiche Lösung auf dem Niederdruckniveau einen weiteren Anteil der entstandenen Wärme auf. Das Dokument EP 3 540 334 A1 offenbart einen Sorptionskreisprozess mit den Merkmalen gemäß dem Oberbegriff von Anspruch 1.

### Aufgabe

Der Erfindung liegt die Aufgabe zugrunde, den Energiebedarf zum Erreichen des Hochdruckniveaus zu vermindern.

### Lösung

Bei Wärmepumpen mit Lösungskreislauf erfolgt die Wärmeabgabe im Absorber mit einem Temperaturgleit. Das Gemisch aus Lösungsmittel und dampfförmigem Kältemittel heizt sich zunächst am Eintritt in den Absorber weit auf und kühlt wieder ab, während sich das Kältemittel in dem Lösungsmittel löst.

Die Erfindung liegt die Erkenntnis zugrunde, dass die aus dem Stand der Technik bekannte Überhitzung am Eintritt in den Absorber für den Phasenwechsel des Kältemittels aus dem gasförmigen in den flüssigen (gelösten) Zustand bei der Dampferzeugung nicht nur nicht erforderlich ist - hier erfolgt auf der Wärmesenkenseite ein Phasenwechsel bei gleichbleibender Temperatur - sondern auch die Aufnahme des Kältemittels begrenzt, weil das Gemisch im Absorber nicht weiter als etwas oberhalb der Siedetemperatur des Dampfes gekühlt werden kann. Mit sinkendem Anteil des Kältemittels steigt das für das Austreiben erforderliche Druckverhältnis zwischen Hochdruckniveau und Niederdruckniveau - und umgekehrt erfordert ein hohes Druckverhältnis einen hohen Strombedarf für den Verdichter und einen niedrigen COP der Sorptionswärmepumpe.

Ausgehend von dem bekannten Sorptionskreisprozess wird nach der Erfindung vorgeschlagen, dass die Lösung eine beim Absorbieren des Mitteldruckteilstroms entstehende Wärme derart an die Lösung auf dem Hochdruckniveau abgibt, dass diese den Hochdruckteilstrom des Kältemittels austreibt. Eine solche Sorptionswärmepumpe benötigt gegenüber dem Stand der Technik keinen Verdichter, um den Hochdruckteilstrom vom Mittel- auf das Hochdruckniveau zu verdichten. Der hierdurch eingesparte Energieaufwand ist höher als der zusätzliche Energieaufwand zum Pumpen des zusätzlichen Massenstroms der angereicherten Lösung auf das Hochdruckniveau.

Vorzugsweise wird in einem erfindungsgemäßen Sorptionskreisprozess ein Wärmeträger der Wärmesenke in zwei parallel geführte Teilströme geteilt und an die Teilströme die beim Absorbieren des Kältemittels auf dem Mitteldruckniveau und auf dem Hochdruckniveau entstehende Wärme abgegeben und die Teilströme des Wärmeträgers werden anschließend wieder zusammengeführt. Bei sehr unterschiedlichen Spreizungen an der Wärmequelle und der Wärmesenke wird in einem solchen erfindungsgemäßen Sorptionskreisprozess ein möglichst großer Anteil des Kältemittels auf dem Mitteldruckniveau absorbiert und die dabei entstehende Wärme an den Wärmeträger der Wärmesenke abgegeben, um dort beispielsweise Dampf zu erzeugen.

Alternativ wird in einem erfindungsgemäßen Sorptionskreisprozess an einen Wärmeträger der Wärmesenke zunächst die beim Absorbieren auf dem Mitteldruckniveau und anschließend die auf dem Hochdruckniveau entstehende Wärme abgegeben. Ist die Spreizung an der Wärmesenke viel größer als an der Wärmequelle, wird so der Wärmeträger der Wärmesenke im Mitteldruckabsorber vorgewärmt und erst im Hochdruckabsorber auf die gewünschte Ausgangstemperatur erwärmt.

Vorzugsweise weist eine solche Sorptionswärmepumpe eine Zwischenpumpe auf, die die im Hochdruckaustreiber angereicherte Lösung auf das Hochdruckniveau pumpt und auf dem Hochdruckniveau in den Hochdruckabsorber fördert. Das Pumpen in zwei Stufen ist energetisch effektiver als das alternativ mögliche einstufige Pumpen und Zwischenentspannen vom Hochdruck- auf das Mitteldruckniveau.

Vorzugsweise weist eine solche Sorptionswärmepumpe einen Mitteldruckabsorber auf, wobei die Lösung zunächst in dem Hochdruckaustreiber und dann in dem Mitteldruckabsorber den Mitteldruckteilstrom des Kältemittels absorbiert. Die in dem Mitteldruckabsorber entstehende Wärme kann dann zusätzlich an die Wärmesenke abgegeben werden.

Vorzugsweise wird in einer solchen Sorptionswärmepumpe eine verbleibende abgereicherte Lösung aus dem Hochdruckaustreiber in einem Drosselventil auf das Mitteldruckniveau entspannt und in den Mitteldruckabsorber geführt. Die beiden Lösungen aus dem Hochdruckaustreiber - die abgereicherte Lösung auf dem Hochdruckniveau und die angereicherte Lösung auf dem Mitteldruckniveau - sind hinsichtlich Temperatur und Zusammensetzung ähnlich und können daher ohne wesentliche Verluste an innerer Energie gemischt werden. Außerdem steigt mit dem Volumenstrom des Lösungsmittels die Aufnahmekapazität für das Kältemittel in dem Mitteldruckabsorber.

Alternativ kann die abgereicherte Lösung auf dem Hochdruckniveau in den Hochdruckabsorber geführt werden. Die abgereicherte Lösung muss dann nicht entspannt werden. Der Energieverlust dem Entspannen wird dann vermieden.

Vorzugsweise weist eine solche Sorptionswärmepumpe einen Lösungswärmeübertrager auf, in dem die Lösung auf dem Mitteldruckniveau aus der Lösung auf dem Hochdruckniveau Wärme aufnimmt. Die aufgenommene Wärme steht dann in der Absorptionseinheit für die Wärmesenke zur Verfügung.

Vorzugsweise sind in einer solchen Sorptionswärmepumpe der Mitteldruckabsorber, der Hochdruckabsorber und/oder der Hochdruckaustreiber Plattenwärmetauscher. Solche Absorber sind technisch einfach, wartungsarm und stehen kostengünstig in einer Vielzahl von Ausführungen am Markt zur Verfügung.

Vorzugsweise weist eine solche Sorptionswärmepumpe ein Drosselventil auf, das die Lösung nach Austritt aus der Absorptionseinheit zum Eintritt in den Austreiber vom Mitteldruck auf den Niederdruck entspannt, und eine Pumpe und einen Verdichter, die die Lösung und das Kältemittel nach Austritt aus dem Austreiber vom Niederdruck auf den Mitteldruck oder das Hochdruckniveau pumpen. Eine solche Sorptionswärmepumpe nimmt Wärme auf einem niedrigen Temperaturniveau auf und gibt sie auf einem höheren Niveau wieder ab. Die reiche Lösung kühlt im Drosselventil ab und kann so die Niedertemperaturwärme aufnehmen. Das gasförmige Kältemittel und das flüssige Lösungsmittel werden getrennt der Absorptionseinheit zugeführt. Pumpen sind allgemein bekannte Vorrichtungen in der Kältetechnik und stehen in einer Vielzahl von Ausführungen preisgünstig zur Verfügung.

Vorzugsweise ist in einer solchen Sorptionswärmepumpe das Lösungsmittel Wasser und das Kältemittel Ammoniak. Wasser und Ammoniak sind natürliche Stoffe und haben sich in der Kältetechnik bewährt.

### Ausführungsbeispiel

Die Erfindung wird nachfolgend anhand von Ausführungsbeispielen erläutert. Es zeigen
- Fig. 1: eine erste Sorptionswärmepumpe,
- Fig. 2: eine zweite Sorptionswärmepumpe,
- Fig. 3: eine dritte Sorptionswärmepumpe und
- Fig. 4: eine vierte Sorptionswärmepumpe.

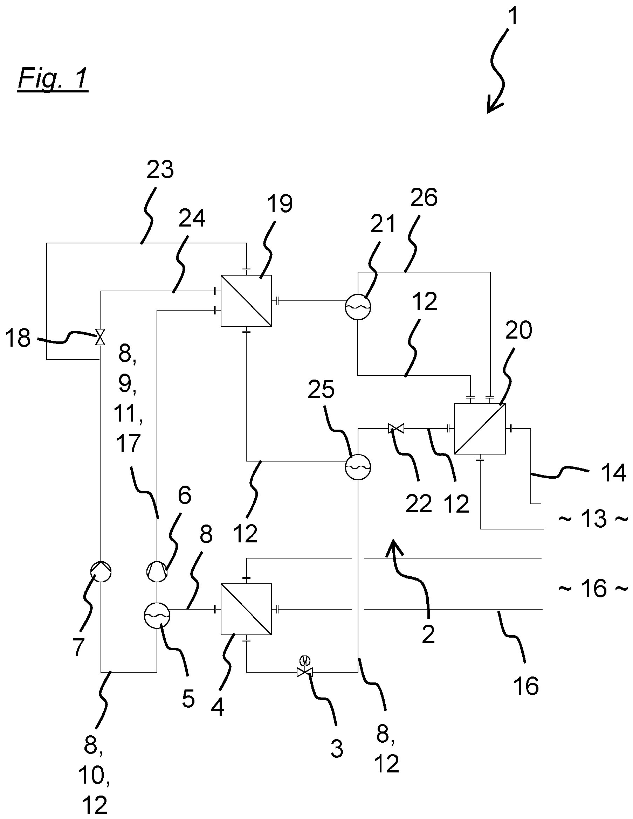

Die in Figur 1 gezeigte erste Sorptionswärmepumpe 1 weist eine Absorptionseinheit 2, ein Drosselventil 3, einen Austreiber 4, einen Abscheider 5, einen Verdichter 6, eine Pumpe 7 sowie Rohrleitungen 8 auf, die die vorgenannten in dieser Reihenfolge zu einem kreisförmig geschlossenen System verbinden, wobei der Verdichter 6 in einem Kältemittelzweig 9 und die Pumpe 7 in einem parallel dazu verlaufenden Lösungsmittelzweig 10 vom Abscheider 5 zur Absorptionseinheit 2 angeordnet ist.

In einem Zyklus eines erfindungsgemäßen Sorptionskreisprozesses wird in der Absorptionseinheit 2 Ammoniak (NH₃) als Kältemittel 11 in einer Lösung 12 von Wasser als Lösungsmittel absorbiert und an eine Wärmesenke 13 Heizleistung abgegeben. In die Absorptionseinheit 2 aus der Wärmesenke 13 eintretendes Speisewasser als Wärmeträger 14 der Wärmesenke 13 tritt als Sattdampf aus der Absorptionseinheit 2 aus. Ein auf einem Hochdruckniveau aus der Absorptionseinheit 2 austretender Strom der Lösung 12 wird durch das Drosselventil 3 auf einen Niederdruck entspannt und im Austreiber 4 aus einer Wärmequelle 16 erhitzt, wobei der Wärmeträger 14 der Wärmequelle 16 abgekühlt wird. Aus dem nachfolgenden Abscheider 5 wird im Lösungsmittelzweig 10 die verbleibende Lösung 12 durch die Pumpe 7 auf das Hochdruckniveau und im Kältemittelzweig 9 ein Mitteldruckteilstrom 17 des Kältemittels 11 durch den Verdichter 6 auf ein Mitteldruckniveau gepumpt und in die Absorptionseinheit 2 gefördert.

Die Absorptionseinheit 2 weist ein Drosselventil 18, einen Hochdruckaustreiber 19, einen Hochdruckabsorber 20, einen Hochdruckabscheider 21 und ein weiteres Drosselventil 22 auf.

Die Lösung 12 wird zunächst in einen Hochdruckteilstrom 23 und einen Mitteldruckteilstrom 24 geteilt. Letzterer wird in dem Drosselventil 18 auf das Mitteldruckniveau entspannt und in den Hochdruckaustreiber 19 geführt und nimmt dort das Kältemittel 11 auf. Die aus dem Hochdruckaustreiber 19 austretende angereicherte Lösung 12 wird über einen Lösungssammler 25 in den Austreiber 4 geführt.

Der Hochdruckteilstrom 23 der Lösung 12 nimmt in dem Hochdruckaustreiber 19 die hierbei freiwerdende Wärme auf und trennt in dem Hochdruckabscheider 21 einen Hochdruckteilstrom 26 des Kältemittels ab. Diesen absorbiert die verbleibende abgereicherte Lösung 12 in dem Hochdruckabsorber 20 und gibt die dabei freiwerdende Wärme an den Wärmeträger 14 der Wärmesenke 13 ab. Die aus dem Hochdruckabsorber 20 austretende Lösung 12 wird in dem weiteren Drosselventil 22 auf das Mitteldruckniveau entspannt und gleichfalls in den Lösungssammler 25 geführt.

Der Austreiber 4, der Hochdruckabsorber 20 und der Hochdruckaustreiber 19 sind Plattenwärmetauscher.

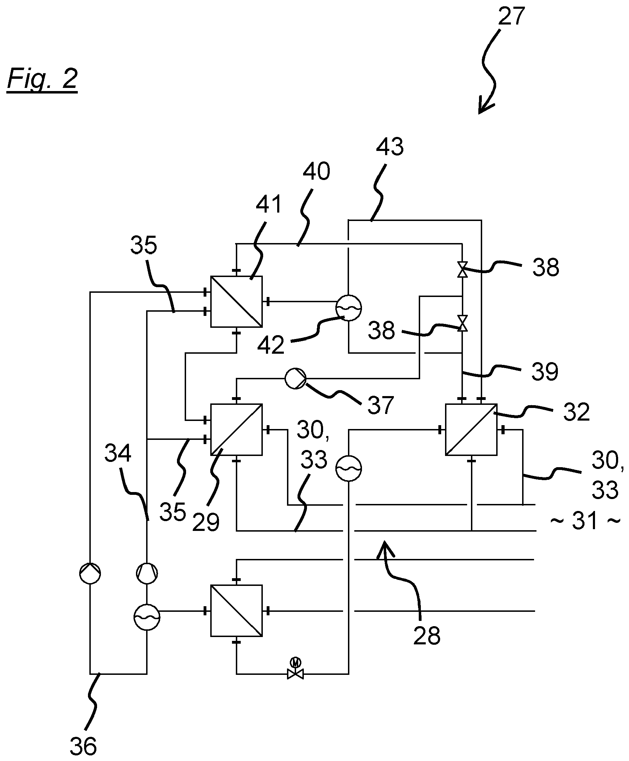

Die in Figur 2 dargestellte zweite Sorptionswärmepumpe 27 entspricht im Wesentlichen der ersten Sorptionswärmepumpe 1. Abweichend weist die Absorptionseinheit 28 der zweiten Sorptionswärmepumpe 27 einen Mitteldruckabsorber 29 auf. Der Wärmeträger 30 der Wärmesenke 31 wird vor Eintritt in den Mitteldruckabsorber 29 und den Hochdruckabsorber 32 zunächst in zwei Teilströme 33 geteilt, der Mitteldruckabsorber 29 und der Hochdruckabsorber 32 werden von den Teilströmen 32 parallel durchströmt, diese nehmen die dort entstehende Wärme auf und werden nach Austritt aus denselben wieder zusammengeführt. Bei Eintritt in die Absorptionseinheit 28 auf dem Mitteldruckniveau wird der Mitteldruckteilstrom 34 des Kältemittels gleichfalls zunächst in zwei Teilströme 35 geteilt, die parallel in den Hochdruckaustreiber 18 und den Mitteldruckabsorber 29 geführt und nacheinander im Hochdruckaustreiber 18 und im Mitteldruckabsorber 29 durch die Lösung 36 absorbiert werden.

Die Absorptionseinheit 28 weist weiter eine Zwischenpumpe 37 und zwei Steuerventile 38 auf. Die aus dem Mitteldruckabsorber 29 austretende Lösung 36 wird von der Zwischenpumpe 37 zunächst auf ein Hochdruckniveau gepumpt und dann geteilt: Über die Steuerventile 38 fließt ein erster Teilstrom 39 in den Hochdruckabsorber 32. Ein zweiter Teilstrom 40 fließt in den Hochdruckaustreiber 41, nimmt dort Wärme auf und trennt in dem Hochdruckabscheider 42 einen Hochdruckteilstrom 43 des Kältemittels 11 ab, der dann in den Hochdruckabsorber 32 geführt und dort absorbiert wird. Die aus dem Hochdruckabscheider 42 verbleibende abgereicherte Lösung 36 wird mit dem ersten Teilstrom 39 der Lösung 36 in den Hochdruckabsorber 32 geführt.

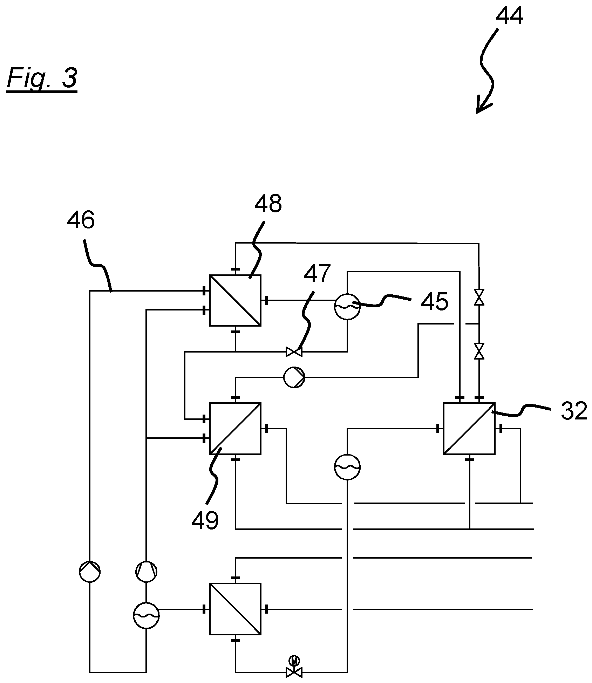

Die in Figur 3 gezeigte dritte Sorptionswärmepumpe 44 entspricht im Wesentlichen der zweiten Sorptionswärmepumpe 27. Abweichend wird in der dritten Sorptionswärmepumpe 44 die im Hochdruckabscheider 45 verbleibende arme Lösung 46 in einem Drosselventil 47 auf das Mitteldruckniveau entspannt und mit der aus dem Hochdruckaustreiber 48 austretenden angereicherten Lösung in den Mitteldruckabsorber 49 geführt.

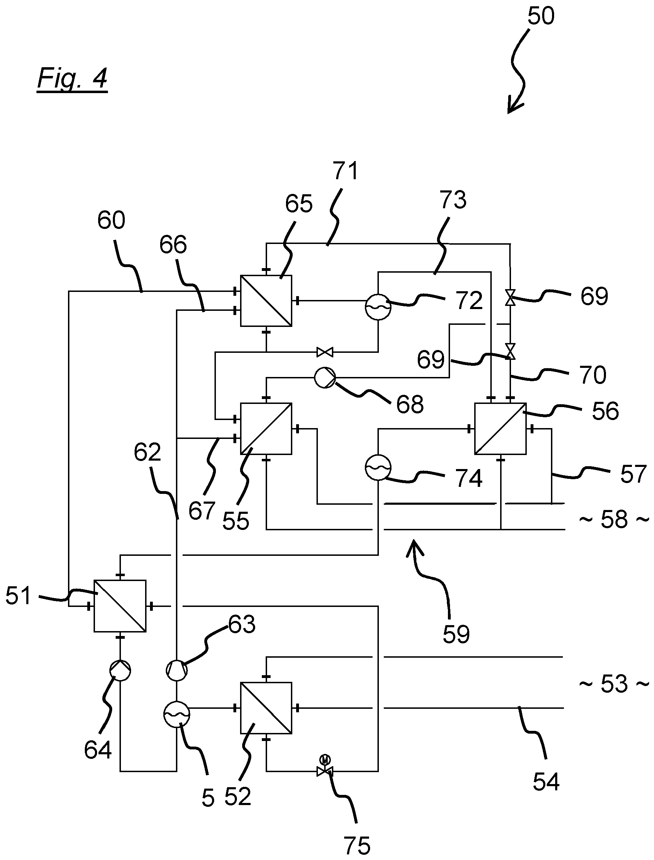

Die in Figur 4 gezeigte vierte Sorptionswärmepumpe 50 und der darin ablaufende erfindungsgemäße Sorptionskreisprozess entsprechen im Wesentlichen der dritten Sorptionswärmepumpe 1. Ergänzend weist die vierte Sorptionswärmepumpe 50 einen Lösungswärmeübertrager 51 zwischen dem Mitteldruckniveau und dem Hochdruckniveau auf.

Im Betrieb der vierten Sorptionswärmepumpe 50 nimmt der Austreiber 52 aus der Wärmequelle 53 eine Leistung von 825 kW auf. Ein Strom von 13,1 kg/s des Wärmeträgers 54 der Wärmequelle 53 strömt unter 100 °C ein und unter 85 °C aus. Der Mitteldruckabsorber 55 weist eine Leistung von 678 kW und der Hochdruckabsorber 56 eine Leistung von 322 kW auf. Ein Strom von 0,437 kg/s des Wärmeträgers 57 der Wärmesenke 58 strömt unter 100 °C in die Absorptionseinheit 59 ein und unter 120 °C unter 2 bar aus.

Auf einem Niederdruckniveau von 23 bar strömen 2,94 kg/s der reichen Lösung 60 mit 65,5 % Kältemittel unter 82 °C in den Austreiber 52 und trennt unter 97 °C im Abscheider 61 einen Mitteldruckteilstrom 62 von 0,91 kg/s zu 98 % reinem, gasförmigem Kältemittel ab, das mittels des Verdichters 63 auf ein Mitteldruckniveau von 54 bar verdichtet und unter 186 °C in die Absorptionseinheit 59 geführt wird. Der verbleibende Strom von 2,03 kg/s Lösung 60 mit noch 51 % Ammoniak wird mittels der Pumpe 64 gleichfalls auf das Mitteldruckniveau gepumpt, nimmt im Lösungswärmeübertrager 51 aus der reichen Lösung 60 241 kW Wärme auf und gelangt unter 121 °C in die Absorptionseinheit 59.

Im Hochdruckaustreiber 65 nimmt die Lösung 60 unter 139 °C den ersten Teilstrom 66 von 0,49 kg/s des Kältemittels 11 auf und verlässt diesen in 2,52 kg/s der angereicherten Lösung 60 mit 60 % Ammoniak unter 125 °C, wird mit 2,26 kg/s der abgereicherten Lösung 60 mit 56 % Ammoniak unter 136 °C zusammen- und in der Mischung mit 58 % Ammoniak unter 131 °C in den Mitteldruckabsorber 55 geführt, nimmt dort den zweiten Teilstrom 67 von 0,42 kg/s des Kältemittels 11 auf und verlässt den Mitteldruckabsorber 55 in einem Strom von 5,2 kg/s mit 61,5 % Ammoniak unter 123 °C.

Die angereicherte Lösung 60 wird mittels der Zwischenpumpe 68 auf das Hochdruckniveau von 56 bar unter 123 °C gepumpt und mittels der Steuerventile 69 auf die zwei Teilströme 70, 71 von je 2,6 kg/s geteilt. Der zweite Teilstrom 71 der angereicherten Lösung 60 wird im Hochdruckaustreiber 65 auf 136 °C aufgeheizt und treibt im Hochdruckabscheider 72 den Hochdruckteilstrom 73 von 0,34 kg/s des zu 96 % reinen Kältemittels 11 aus. Im Hochdruckabsorber 56 absorbiert der erste Teilstrom 70 der angereicherten Lösung 60 den Hochdruckteilstrom 73 des Kältemittels. Die reiche Lösung 60 verlässt den Lösungssammler 74 unter 123 °C, durchströmt den Lösungswärmeübertrager 51 und wird im Drosselventil 75 auf das Niederdruckniveau gedrosselt.

In den Figuren sind
- 1: Sorptionswärmepumpe
- 2: Absorptionseinheit
- 3: Drosselventil
- 4: Austreiber
- 5: Abscheider
- 6: Verdichter
- 7: Pumpe
- 8: Rohrleitung
- 9: Kältemittelzweig
- 10: Lösungsmittelzweig
- 11: Kältemittel
- 12: Lösung
- 13: Wärmesenke
- 14: Wärmeträger der Wärmesenke
- 15: Wärmequelle
- 16: Wärmeträger der Wärmequelle
- 17: Mitteldruckteilstrom des Kältemittels
- 18: Drosselventil
- 19: Hochdruckaustreiber
- 20: Hochdruckabsorber
- 21: Hochdruckabscheider
- 22: Drosselventil
- 23: Hochdruckteilstrom der Lösung
- 24: Mitteldruckteilstrom der Lösung
- 25: Lösungssammler
- 26: Hochdruckteilstrom des Kältemittels
- 27: Sorptionswärmepumpe
- 28: Absorptionseinheit
- 29: Mitteldruckabsorber
- 30: Wärmeträger der Wärmesenke
- 31: Wärmesenke
- 32: Hochdruckabsorber
- 33: Teilstrom des Wärmeträgers
- 34: Mitteldruckteilstrom
- 35: Teilstrom des Kältemittels
- 36: Lösung
- 37: Zwischenpumpe
- 38: Steuerventil
- 39: Teilstrom der Lösung
- 40: Teilstrom der Lösung
- 41: Hochdruckaustreiber
- 42: Hochdruckabscheider
- 43: Hochdruckteilstrom des Kältemittels
- 44: Sorptionswärmepumpe
- 45: Hochdruckabscheider
- 46: Lösung
- 47: Drosselventil
- 48: Hochdruckaustreiber
- 49: Mitteldruckabsorber
- 50: Sorptionswärmepumpe
- 51: Lösungswärmeübertrager
- 52: Austreiber
- 53: Wärmequelle
- 54: Wärmeträger der Wärmequelle
- 55: Mitteldruckabsorber
- 56: Hochdruckabsorber
- 57: Wärmeträger der Wärmesenke
- 58: Wärmesenke
- 59: Absorptionseinheit
- 60: Lösung
- 61: Abscheider
- 62: Mitteldruckteilstrom des Kältemittels
- 63: Verdichter
- 64: Pumpe
- 65: Hochdruckaustreiber
- 66: Teilstrom des Kältemittels
- 67: Teilstrom des Kältemittels
- 68: Zwischenpumpe
- 69: Steuerventil
- 70: Teilstrom der Lösung
- 71: Teilstrom der Lösung
- 72: Hochdruckabscheider
- 73: Hochdruckteilstrom des Kältemittels
- 74: Lösungssammler
- 75: Drosselventil

## Patentansprüche

1. Sorptionskreisprozess
• mit gasförmigem Kältemittel (11) und einer flüssigen einphasigen Lösung (12, 36, 46, 60) des Kältemittels (11) in einem Lösungsmittel,
• wobei die Lösung (12, 36, 46, 60) auf einem Mitteldruckniveau einen Mitteldruckteilstrom (17, 34, 62) und auf einem Hochdruckniveau einen Hochdruckteilstrom (26, 43, 73) des Kältemittels (11) absorbiert und dabei entstehende Wärme an eine Wärmesenke (13, 31, 58) außerhalb des Sorptionskreisprozesses abgibt und
• wobei die Lösung (12, 36, 46, 60) nach Absorption des Kältemittels (11) auf einem Niederdruckniveau aus einer Wärmequelle (16, 53) außerhalb des Sorptionskreisprozesses Wärme aufnimmt und dabei das Kältemittel (11) austreibt,
***dadurch gekennzeichnet, dass*** die Lösung (12, 36, 46, 60) eine beim Absorbieren des Mitteldruckteilstroms (17, 34, 62) entstehende Wärme derart an die Lösung (12, 36, 46, 60) auf dem Hochdruckniveau abgibt, dass diese den Hochdruckteilstrom (26, 43, 73) des Kältemittels (11) austreibt.

2. Sorptionskreisprozess nach dem vorgenannten Anspruch, ***dadurch gekennzeichnet, dass*** ein Wärmeträger (30, 57) der Wärmesenke (31, 58) in zwei parallel geführte Teilströme (33) geteilt und an die Teilströme (33) die beim Absorbieren des Kältemittels auf dem Mitteldruckniveau und auf dem Hochdruckniveau entstehende Wärme abgegeben wird und die Teilströme (33) des Wärmeträgers (30, 57) anschließend wieder zusammengeführt werden.

3. Sorptionskreisprozess nach einem der vorgenannten Ansprüche in einer Sorptionswärmepumpe (1, 27, 44, 50), ***dadurch gekennzeichnet, dass*** die Lösung (12, 36, 46, 60)
• in einer Absorptionseinheit (2, 28, 59) den Mitteldruckteilstrom (17, 34, 62) und den Hochdruckteilstrom (26, 43, 73) absorbiert und
• in einem Austreiber (4, 52) das Kältemittel (11) austreibt, und
• in einem Hochdruckaustreiber (19, 41, 48, 65) den Mitteldruckteilstrom (17, 34, 62) absorbiert.

4. Sorptionskreisprozess nach dem vorgenannten Anspruch, ***dadurch gekennzeichnet, dass*** eine Zwischenpumpe (37, 68) die im Hochdruckaustreiber (41, 48, 65) angereicherte Lösung (36, 46) auf das Hochdruckniveau pumpt und auf dem Hochdruckniveau in den Hochdruckabsorber (32, 56) fördert.

5. Sorptionskreisprozess nach dem vorgenannten Anspruch, ***dadurch gekennzeichnet, dass*** die Lösung (36, 46, 60) zunächst in dem Hochdruckaustreiber (41, 48, 65) und dann in einem Mitteldruckabsorber (29, 49, 55) den Mitteldruckteilstrom (34, 62) des Kältemittels absorbiert.

6. Sorptionskreisprozess nach dem vorgenannten Anspruch, ***dadurch gekennzeichnet, dass*** eine verbleibende abgereicherte Lösung (46, 60) aus dem Hochdruckaustreiber (48, 65) in einem Drosselventil (47) auf das Mitteldruckniveau entspannt und in den Mitteldruckabsorber (49, 55) geführt wird.

7. Sorptionskreisprozess nach einem der Ansprüche 3 bis 6, ***dadurch gekennzeichnet, dass*** in einem Lösungswärmeübertrager (51) die Lösung (60) auf dem Mitteldruckniveau aus der Lösung (60) auf dem Hochdruckniveau Wärme aufnimmt.

8. Sorptionskreisprozess nach einem der Ansprüche 3 bis 7, ***dadurch gekennzeichnet, dass*** der Hochdruckaustreiber (19, 41, 48, 65), der Mitteldruckabsorber (29, 49, 55) und/oder der Hochdruckabsorber (20, 32, 56) Plattenwärmetauscher sind.

9. Sorptionskreisprozess nach einem der Ansprüche 3 bis 8, ***dadurch gekennzeichnet, dass*** ein Drosselventil (3, 75) die Lösung (12, 36, 46, 60) nach Austritt aus der Absorptionseinheit (2, 28, 59) zum Eintritt in den Austreiber (4, 52) vom Hochdruckniveau auf das Niederdruckniveau entspannt, und eine Pumpe (7, 64) und ein Verdichter (6, 62) die Lösung (12, 36, 46, 60) und das Kältemittel (11) nach Austritt aus dem Austreiber (4, 52) vom Niederdruckniveau auf das Mitteldruckniveau oder das Hochdruckniveau pumpen.

10. Sorptionskreisprozess nach einem der Ansprüche 3 bis 9, ***dadurch gekennzeichnet, dass*** das Lösungsmittel Wasser und das Kältemittel (11) Ammoniak ist.

## Claims

1. A sorption cycle
- with a gaseous refrigerant (11) and a liquid one-phase solution (12, 36, 46, 60) of the refrigerant (11) in a solvent;
- wherein the solution (12, 36, 46, 60) absorbs a medium-pressure partial flow (17, 34, 64) of the refrigerant (11) at a medium-pressure level, and wherein the solution (12, 36, 46, 60) absorbs a high-pressure partial flow (26, 43, 73) of the refrigerant (11) at a high-pressure level and wherein the solution (12, 36, 46, 60) emits heat generated from absorbing the medium-pressure partial flow and generated from absorbing the high-pressure partial flow to a heat sink (13, 31, 58) outside of the sorption cycle; and
- wherein the solution (12, 36, 46, 60) after absorbing the refrigerant (11) absorbs heat from a heat source (16, 53) outside of the sorption cycle and thus expels the refrigerant,
**characterized in that** the solution (12, 36, 46, 60) emits heat generated by absorbing the medium-pressure partial flow (17, 34, 62) to the solution (12, 36, 46, 60) at the high-pressure level, so that the latter expels the high-pressure partial flow (26, 43, 73) of the refrigerant (11).

2. The sorption cycle according to the preceding claim, **characterized in that** a heat carrier (30, 57) of the heat sink (31, 58) is divided into two partial flows (33) run in parallel and **characterized in that** heat generated from absorbing the refrigerant at the medium-pressure level and at the high-pressure level is emitted to the two partial flows (33) and **characterized in that** the two partial flows (33) of the heat carrier (30, 57) are subsequently joined again.

3. The sorption cycle according to one of the preceding claims in a sorption heat pump (1, 27, 44, 50), **characterized in that** the solution (12, 36, 46, 60)
- absorbs the medium-pressure partial flow (17, 34, 62) and the high-pressure partial flow (26, 43, 73) in an absorption unit (2, 28, 59),
- expels the refrigerant (11) in a generator (4, 52), and
absorbs the medium pressure partial flow (17, 34, 62) in a high-pressure generator (19, 41, 48, 65).

4. The sorption cycle according to the preceding claim, **characterized in that** an intermediary pump (37, 68) pumps the solution (36, 46) enriched in the high-pressure generator (41, 48, 65) to the high-pressure level and feeds the latter at the high-pressure level into the high-pressure absorber (32, 56).

5. The sorption cycle according to the preceding claim, **characterized in that** the solution (36, 46, 60) absorbs the medium-pressure partial flow (34, 62) of the refrigerant in the high-pressure generator (41, 48, 65) first, and thereafter in the medium-pressure absorber (29, 49, 55).

6. The sorption cycle according to the preceding claim, **characterized in that** a reduced solution (46, 60) remaining from the high-pressure generator (48, 65) is expanded in a throttle valve (47) to the medium-pressure level and run into the medium pressure absorber (49, 55).

7. The sorption cycle according to one of the claims 3 through 6, **characterized in that** the solution (60) at the medium-pressure level absorbs heat from the solution (60) at the high-pressure level in a solution heat exchanger (51).

8. The sorption cycle according to one of the claims 3 through 7, **characterized in that** the high-pressure generator (19, 41, 48, 65), the medium- pressure absorber (29, 49, 55), and/or the high-pressure absorber (20, 32, 56) are plate heat exchangers.

9. The sorption cycle according to one of the claims 3 through 8, **characterized in that** a throttle valve (3, 75) expands the solution (12, 36, 46, 60) after exiting the absorption unit (2, 28, 59) from the high-pressure level to the low-pressure level to enter the generator (4, 52), and a pump (7, 64) and a compressor (6, 62) pump the solution (12, 36, 46, 60) and the refrigerant (11) after exiting from the generator (4, 52) from the low pressure level to the medium pressure level or to the high-pressure level.

10. The sorption cycle according to one of the claims 3 through 9, **characterized in that** the solvent is water and the refrigerant (11) is ammonia.

## Revendications

1. Procédé de cicuit de sorption
• avec un réfrigérant gazeux (11) et une solution monophasée liquid (12, 36, 46, 60) du réfrigérant (11) dans un solvant,
• sachant que la solution (12, 36, 46, 60) absorbe un flux partiel de moyenne pression (17, 34, 62) et à un niveau de haute pression un flux partiel de haute pression (26, 43, 73) du réfrigérant (11) et évacue à cet effet la chaleur créée sur un dissipateur thermique (13, 31, 58) en dehors du procédé de circuit de sorption, et
• sachant que la solution (12, 36, 46, 60) reçoit après absorption du réfrigérant (11) à un niveau à basse pression d'une source de chaleur (16, 53) en dehors du procédé de circuit de sorption et évacue à cet effet le réfrigérant (11),
**caractérisé en ce que** la solution (12, 36, 46, 60) degage une chaleur créée lors de l'absorption du flux partiel de moyenne pression (17, 34, 62) de telle manière sur la solution (12, 36, 46, 60) au niveau de haute pression que celle-ci évacue le flux partiel de haute pression (26, 43, 73) du réfrigérant (11).

2. Procédé de cicuit de sorption selon la revendication précédente, **caractérisé en ce qu'**un caloporteur (30, 57) du dissipateur thermique (31, 58) est divisé en deux flux partiels (33) guidés parallèlement et la chaleur créée sur les flux partiels (33) lors de l'absorption du réfrigérant est dégagée au niveau de moyenne pression et au niveau de haute pression et les flux partiels (33) du caloporteur (30, 57) sont ensuite à nouveau réunis.

3. Procédé de cicuit de sorption selon l'une quelconque des revendications précédentes dans une pompe à chaleur à sorption (1, 27, 44, 50), **caractérisé en ce que** la solution (12, 36, 46, 60)
• absorbe le flux partiel de moyenne pression (17, 34, 62) et le flux partiel de haute pression (26, 43, 73) dans une unité d'absorption (2, 28, 59), et
• évacue le réfrigérant (11) dans un générateur (4, 52), et
• absorbe le flux partiel de moyenne pression (17, 34, 62) dans un générateur de haute pression (19, 41, 48, 65.

4. Procédé de cicuit de sorption selon la revendication précédente, **caractérisé en ce qu'**une pompe intermédiaire (37, 68) pompe la solution (36, 46) enrichie dans le générateur de haute pression (41, 48, 65) au niveau de haute pression et la transporte au niveau de haute pression dans l'absorbeur de haute pression (32, 56).

5. Procédé de cicuit de sorption selon la revendication précédente, **caractérisé en ce que** la solution (36, 46, 60) absorbe le flux partiel de moyenne pression (34, 62) du réfrigérant d'abord dans le générateur de haute pression (41, 48, 65) et ensuite dans un absorbeur de moyenne pression (29, 49, 55).

6. Procédé de cicuit de sorption selon la revendication précédente, **caractérisé en ce qu'**une solution appauvrie restante (46, 60) est détendue du générateur de haute pression (48, 65) dans une soupape d'étranglement (47) au niveau de moyenne pression et est guidée dans l'absorbeur de moyenne pression (49, 55).

7. Procédé de cicuit de sorption selon l'une quelconque des revendications 3 à 6, **caractérisé en ce que** la solution (60) reçoit de la chaleur dans un transmetteur de chaleur à solution (51) au niveau de haute pression à partir de la solution (60) au niveau de haute pression.

8. Procédé de cicuit de sorption selon l'une quelconque des revendications 3 à 7, **caractérisé en ce que** le générateur de haute pression (19, 41, 48, 65), l'absorbeur de moyenne pression (29, 49, 55) et/ou l'absorbeur de haute pression (20, 32, 56) sont des échaneurs de chaleur à plaques.

9. Procédé de cicuit de sorption selon l'une quelconque des revendications 3 à 8, **caractérisé en ce qu'**une soupape d'étranglement (3, 75) détend la solution (12, 36, 46, 60) après la sortie de l'unité d'absorption (2, 28, 59) vers l'entrée dans le générateur (4, 52) du niveau de haute pression au niveau de basse pression et une pompe (7, 64) et un compresseur (6, 62) pompent la solution (12, 36, 46, 60) et le réfrigérant (11) après la sortie du générateur (4, 52) du niveau à basse pression au niveau de moyenne pression ou au niveau de haute pression.

10. Procédé de cicuit de sorption selon l'une quelconque des revendications 3 à 9, **caractérisé en ce que** le solvant est de l'eau et le réfrigérant (11) de l'ammoniac.
